# EUROPÄISCHE PATENTSCHRIFT

(11) **EP 0 781 115 B1**
(45) Veröffentlichungstag und Bekanntmachung des Hinweises auf die Patenterteilung: **24.10.2001**
(21) Anmeldenummer: 96907473.1
(22) Anmeldetag: 14.03.1996
(51) Int. Cl.: A61C 17/24

(54) **ELEKTRISCH BETRIEBENES ZAHNREINIGUNGSGERÄT**
ELECTRIC TOOTH-CLEANING DEVICE
APPAREIL ELECTRIQUE SERVANT A NETTOYER LES DENTS

(30) Priorität: 21.04.1995 DE 19514710
(43) Veröffentlichungstag der Anmeldung: 02.07.1997
(73) Patentinhaber: Braun GmbH, Kronberg (DE)
(72) Erfinder: BOLAND, Bernhard, D-60385 Frankfurt am Main (DE); HACZEK, Werner, D-65510 Idstein (DE)
(86) Internationale Anmeldenummer: EP9601097
(87) Internationale Veröffentlichungsnummer: WO9632903

(56) Entgegenhaltungen:
- EP-A- 0 636 350
- DE-U- 9 414 250
- US-A- 2 916 752
- US-A- 3 927 434
- US-A- 4 377 877
- US-A- 4 638 520

## Beschreibung

Die Erfindung betrifft ein elektrisch betriebenes Zahnreinigungsgerät mit den Merkmalen des Oberbegriffs des Patentanspruchs 1.

Ein derartiges Zahnreinigungsgerät ist aus der deutschen Offenlegungsschrift DE 43 09 078 A1 bekannt, die hiermit durch ausdrückliche Bezugnahme in den Offenbarungsgehalt der vorliegenden Patentanmeldung aufgenommen wird.

Dort ist ein Zahnreinigungsgerät beschrieben, bei dem ein Aufsatzteil auf ein Griffteil aufgesteckt werden kann. In dem Aufsatzteil ist ein längliches, dünnes und flexibles Reinigungswerkzeug verschiebbar untergebracht, das zur Zahnreinigung, insbesondere der Interdentalräume, geeignet ist. An dem Griffteil ist ein Schalter angebracht, mit dem das Zahnreinigungsgerät ein- und ausgeschaltet werden kann. Verschiebt ein Benutzer den Schalter gegen die Kraft einer Feder in Richtung zum Aufsatzteil hin, so wird das Reinigungswerkzeug in eine Rotation oder alternierende Oszillation um eine Längsachse versetzt. Des weiteren wird durch das Verschieben erreicht, daß das Reinigungswerkzeug aus dem Aufsatzteil herausgeschoben wird. Der Benutzer kann nunmehr mit Hilfe des rotierenden Reinigungswerkzeugs insbesondere die Interdentalräume zwischen seinen Zähnen reinigen. Läßt der Benutzer den Schalter wieder los, so wird das Reinigungswerkzeug durch die Kraft der Feder in das Aufsatzteil zurückgeschoben und der das Reinigungswerkzeug antreibende Motor wird ausgeschaltet.

Aufgabe der Erfindung ist es, das bekannte Zahnreinigungsgerät insbesondere im Hinblick auf die Handhabung durch den Benutzer und/oder die Lebensdauer des Reinigungswerkzeugs weiter zu verbessern.

Diese Aufgabe wird bei dem Zahnreinigungsgerät der eingangs genannten Art erfindungsgemäß durch die Merkmale des Anspruchs 1 gelöst.

Nach der Erfindung ist zur Kopplung des Reinigungswerkzeugs und der Antriebsmittel ein elastisches Element, insbesondere eine Feder vorgesehen. Es besteht also keine starre Verbindung mehr zwischen dem Reinigungswerkzeug und den Antriebsmitteln, vielmehr sind diese Teile mittels einer elastischen bzw. nachgiebigen Verbindung entkoppelt. Die elastische bzw. nachgiebige Federverbindung gewährleistet ein verbessertes Einführen des Reinigungswerkzeuges in die Zahnzwischenräume, da diese sozusagen selbsttätig ertastet werden können, und vermeidet somit Fehlbedienungen beispielsweise durch Unachtsamkeiten des Benutzers und/oder Überbeanspruchung des Reinigungswerkzeugs, die ansonsten durch ein Verkeilen oder Verklemmen des Reinigungswerkzeuges im Interdentalbereich hervorgerufen werden könnten.

Durch die vorteilhafte Ausgestaltung der Erfindung nach den Merkmalen des Patentanspruchs 2 wird mit Hilfe des elastischen Elements, insbesondere der Feder ein Pufferbereich geschaffen. Damit ist es möglich, daß das Reinigungswerkzeug und die Antriebsmittel relativ zueinander verschiebbar sind. Verschiebt also der Benutzer den Schalter in Richtung zum Aufsatzteil hin, so kann der entstehende Verschiebeweg in dem Pufferbereich durch ein Zusammendrücken der Feder wieder aufgebraucht werden, so daß das Reinigungswerkzeug selbst, beispielsweise wenn es auf einen Widerstand stößt, nicht verschoben wird. Dies hat den Vorteil, daß das Reinigungswerkzeug nicht aus dem Aufsatzteil herausgeschoben wird, wenn der Benutzer den Schalter betätigt, das Aufsatzteil jedoch einer Zahnfläche zugewandt ist und somit nicht in einen Interdentalraum eindringen kann. Das Reinigungswerkzeug wird also nicht starr aus dem Aufsatzteil auf die entgegenstehende Zahnfläche herausgeschoben, sondern verbleibt so lange innerhalb des Aufsatzteils, bis ein Interdentalraum vorhanden ist, in den das Reinigungswerkzeug gegebenenfalls mit Hilfe der Kraft der zusammengedrückten Feder bzw. des elastischen Elements eindringen kann. Der Pufferbereich des elastischen Elements bzw. der Feder gewährleistet somit eine einfache Handhabung des Reinigungswerkzeuges durch den Benutzer. Des weiteren wird durch den Pufferbereich der Feder dem Benutzer eine Einfädelhilfe zur Verfügung gestellt. Darüber hinaus wird durch den Pufferbereich erreicht, daß das Reinigungswerkzeug beim Einführen in den Interdentalraum bei unsachgemäßer Handhabung durch den Benutzer nicht abgeknickt oder abgebrochen wird. Statt dessen wird dann das Reinigungswerkzeug gegen die Kraft des elastischen Elements in das Aufsatzteil zurückgeschoben, so daß es sicher untergebracht ist. Durch den Pufferbereich wird also auch die Lebensdauer des Reinigungswerkzeugs erhöht.

Besonders zweckmäßig ist es, die Länge des Pufferbereichs entsprechend den Merkmalen des Patentanspruchs 3 zu wählen. Dadurch wird erreicht, daß das Reinigungswerkzeug auch bei einer vollständigen Betätigung bzw.Verschiebung des Schalters, also bei maximalem Verschiebeweg, innerhalb des Aufsatzteils verbleibt und somit eine Gefährdung des Benutzers in jedem Fall vermieden wird.

Bei der vorteilhaften Ausgestaltung der Erfindung nach den Merkmalen des Patentanspruchs 4 wird eine Rutschkupplung gebildet. Diese kann wahlweise zwischen dem elastischen Element bzw. der Feder und dem Reinigungswerkzeug und/oder dem elastischen Element bzw. der Feder und den Antriebsmitteln angeordnet sein. Diese Rutschkupplung hat den Vorteil, daß im normalen Betrieb des Zahnreinigungsgeräts die drehfeste Übertragung der Rotation von den Antriebsmitteln auf das Reinigungswerkzeug gewährleistet ist. Wird jedoch beispielsweise durch eine Fehlbedienung des Benutzers das Reinigungswerkzeug in einem Interdentalraum eingeklemmt oder aus sonstigen Gründen die Rotation des Reinigungswerkzeugs gebremst, so werden derartige Änderungen der Rotation des Reinigungswerkzeugs von der Rutschkupplung aufgefangen. Sobald auf das Reinigungswerkzeug ein bestimmtes Bremsmoment einwirkt, rutscht die Rutschkupplung durch und die drehfeste Verbindung zwischen den Antriebsmitteln und dem Reinigungswerkzeug ist somit nicht mehr vorhanden. Die Rutschkupplung stellt somit eine Begrenzung für das zu übertragende Drehmoment dar. Eine Schädigung der Zähne des Benutzers durch ein eingeklemmtes, aber trotzdem noch rotierendes Reinigungswerkzeug wird somit sicher verhindert. Ebenfalls wird durch das Durchrutschen der Rutschkupplung gewährleistet, daß das Reinigungswerkzeug nicht in das Zahnfleisch des Benutzers eindringen und eine Verletzung hervorrufen kann. Erst wenn das Reinigungswerkzeug wieder frei beweglich ist, entsteht über die Rutschkupplung erneut eine drehfeste Verbindung mit den Antriebsmitteln und die Reinigung der Interdentalräume kann durch den Benutzer fortgesetzt werden. Es wird darauf hingewiesen, daß die beschriebene Rutschkupplung des elastischen Elements auch unabhängig von dem Pufferbereich des elastischen Elements, also auch ohne den Pufferbereich bei dem Zahnreinigungsgerät eingesetzt werden kann.

Bei der vorteilhaften Weiterbildung nach den Merkmalen des Patentanspruchs 5 und 6 wird die Rutschkupplung durch Windungen der Feder auf einer Welle erreicht, wobei der Durchmesser der Windungen geringfügig kleiner ist als der Durchmesser der Welle. Im normalen Betrieb des Zahnreinigungsgeräts wird durch das enge Umschlingen der Feder um die Welle eine drehfeste Verbindung zwischen der Feder und der Welle und damit dem Reinigungswerkzeug erreicht. Wird von dem Reinigungswerkzeug hingegen ein Bremsmoment auf die Welle ausgeübt, so werden die Windungen der Feder von der Welle derart "aufgedreht", daß sich der Durchmesser der Windungen geringfügig vergrößert. Dies hat zur Folge, daß die Welle innerhalb des vergrößerten Durchmessers der Windungen durchrutscht, ohne die Feder mitzunehmen. Erst wenn das Bremsmoment nicht mehr vorhanden ist, verringert sich der Durchmesser der Windungen wieder derart, daß die Welle erneut eng umschlungen wird und somit eine drehfeste Übertragung der Rotation von der Feder auf die Welle und damit auf das Reinigungswerkzeug wieder erreicht wird. Die auf diese Weise realisierte Rutschkupplung ist äußerst einfach und kostengünstig herstellbar. Des weiteren gewährleistet die erfindungsgemäße Rutschkupplung eine sichere Funktionsweise auch über eine längere Betriebsdauer ohne die Gefahr von verschleißbedingten Fehlfunktionen.

Bei einer besonders zweckmäßigen Ausgestaltung der Erfindung nach dem Patentanspruch 7 sind ein Pufferbereich sowie eine Rutschkupplung vorgesehen. Der Pufferbereich wird dadurch realisiert, daß die Antriebshülse in Richtung der Längsachse verschiebbar ist. Dies hat zur Folge, daß die Welle und damit das Reinigungswerkzeug auf der einen Seite und die Antriebshülse auf der anderen Seite relativ zueinander verschiebbar sind. Die Rutschkupplung wird dadurch realisiert, daß die zugehörigen Windungen der Feder die Welle eng umschlingen und somit eine drehfeste Verbindung zwischen der Welle und damit dem Reinigungswerkzeug auf der einen Seite und der Feder auf der anderen Seite gewährleisten. Damit diese drehfeste Verbindung zu der Antriebshülse und damit zu den Antriebsmitteln weitergegeben wird, ist die Feder drehfest mit der Antriebshülse verbunden. Diese Ausgestaltung der Erfindung stellt eine äußerst einfache und kostengünstige Verknüpfung des Pufferbereichs und der Rutschkupplung dar. Allein mit Hilfe der entsprechend ausgestalteten Feder wird erreicht, daß zum einen die Vorteile des Pufferbereichs erzielt werden, sowie zum anderen die bereits dargelegten Vorteile der Rutschkupplung.

Besonders zweckmäßig ist es dabei nach dem Patentanspruch 8, wenn die Feder zwei Bereiche mit unterschiedlichen Durchmessern aufweist. Der eine Bereich, insbesondere der Bereich mit dem größeren Durchmesser, dient der Realisierung des Pufferbereichs, während der andere Bereich der Realisierung der Rutschkupplung dient.

Bei der Weiterbildung der Erfindung nach dem Patentanspruch 9 dient das Lagerrohr der Antriebshülse einerseits der Lagerung der Welle sowie andererseits der Aufnahme und Abstützung der Feder. Durch das Lagerrohr werden somit in einfacher Weise die Welle und die Feder fixiert und festgelegt.

Durch die Weiterbildung der Erfindung nach dem Patentanspruch 10 wird erreicht, daß die Feder auf der Welle nicht hin- und herrutscht, sondern durch die Anschläge festgelegt ist. Damit ist auf einfache und kostengünstige Weise die sichere Funktionsweise des Zahnreinigungsgeräts gewährleistet.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind. Dabei bilden alle beschriebenen und/oder dargestellten Merkmale für sich oder in beliebiger Kombination den Gegenstand der Erfindung, unabhängig von ihrer Zusammenfassung in den Ansprüchen und deren Rückbeziehung.
- Fig. 1: zeigt eine schematische Darstellung eines Längsschnitts durch ein Ausführungsbeispiel eines erfindungsgemäßen Zahnreinigungsgeräts in einer Ausschaltposition,
- Fig. 2: zeigt eine schematische Darstellung eines Längsschnitts durch das Zahnreinigungsgerät der Fig. 1 in einer Einschaltposition, und
- Fig. 3: zeigt eine schematische Perspektivdarstellung einer Feder des Zahnreinigungsgeräts der Fign. 1 und 2.

In der deutschen Offenlegungsschrift DE 43 09 078 A1 ist ein elektrisch betriebenes Zahnreinigungsgerät beschrieben, das in seiner Gesamtheit, wie auch im Hinblick auf seine einzelnen Merkmale hiermit durch ausdrückliche Bezugnahme in den Offenbarungsgehalt der vorliegenden Patentanmeldung aufgenommen wird. Dieses bekannte Zahnreinigungsgerät stellt den Ausgangspunkt dar für das nachfolgend beschriebene Ausführungsbeispiel eines erfindungsgemäßen Zahnreinigungsgeräts.

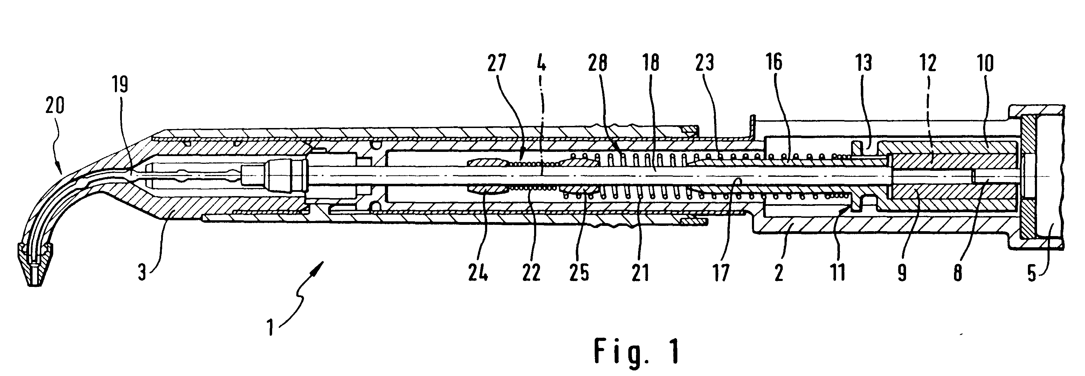

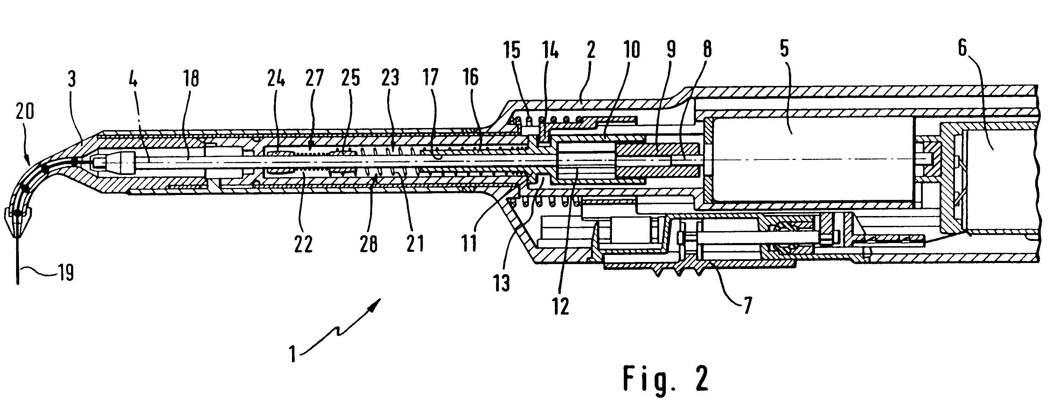

In den Fign. 1 und 2 ist ein Zahnreinigungsgerät 1 dargestellt, das aus einem Griffteil 2 und einem aufsteckbaren Aufsatzteil 3 zusammengesetzt ist. Das Griffteil 2 und das Aufsatzteil 3 sind in Richtung einer Längsachse 4 stabförmig ausgebildet und weisen einen zumeist kreisförmigen Querschnitt auf. In dem Griffteil 2 ist ein elektrisch angetriebener Motor 5 ortsfest untergebracht, der mit einer elektrischen Spannnungsquelle 6, insbesondere mit einem wiederaufladbaren Akkumulator elektrisch verbunden ist. Mit Hilfe eines in Richtung der Längsachse 4 verschiebbaren Schalters 7 kann der Motor 5 von einem Benutzer ein- und ausgeschaltet werden.

Der Motor 5 weist eine in der Längsachse 4 angeordnete Antriebswelle 8 auf, die mit wenigstens einem, vorzugsweise mit drei radial nach außen abstehenden und sich in Richtung der Längsachse 4 erstreckenden Flügeln 9 versehen ist. Die Flügel 9 greifen in eine topfförmige Aufnahme 10 einer Antriebshülse 11 ein, wobei der Innenraum der topfförmigen Aufnahme 10 mit einer den Flügeln 9 zugeordneten Anzahl von Längsstegen 12 versehen ist, die radial nach innen abstehen und sich ebenfalls in Richtung der Längsachse 4 erstrecken. Die Antriebswelle 8 und die Antriebshülse 11 sind somit drehfest miteinander verbunden.

Die Antriebshülse 11 ist derart in dem Griffteil 2 untergebracht, daß sie in Richtung der Längsachse 4 verschiebbar ist. Des weiteren ist die Anriebshülse 11 mit einer zur Längsachse 4 konzentrischen Ringnut 13 versehen, in die eine mit dem Schalter 7 fest verbundene Leiste 14 eingreift. Wird der Schalter 7 in Richtung der Längsachse 4 verschoben, so wird über die Leiste 14 und die Ringnut 13 gleichzeitig die Antriebshülse 11 in entsprechender Richtung verschoben. Dabei kann die Antriebshülse 11 aufgrund der Ringnut 13 in jeder Stellung des Schalters 7 um die Längsachse 4 rotieren. Des weiteren ist die Länge der Flügel 9 und der Längsstege 12 derart gewählt, daß die drehfeste Verbindung der Antriebswelle 8 und der Antriebshülse 11 in jeder Stellung des Schalters 7 erhalten bleibt.

An der Leiste 14 liegt eine Schraubenfeder 15 an, die an einer Innenwand des Griffteils 2 abgestützt ist. Die Schraubenfeder 15 drückt die Leiste 14 und damit den Schalter 7 in eine Ausschaltposition, die in der Fig. 1 dargestellt ist. In dieser Ausschaltposition ist die topfförmige Aufnahme 10 der Antriebshülse 11 nahezu vollständig über die Flügel 9 der Antriebswelle 8 gestülpt. Die Antriebshülse 11 befindet sich in einer von dem Aufsatzteil 3 abgewandten Stellung. Der mit der Antriebshülse 11 gekoppelte Schalter 7 befindet sich somit in einer ebenfalls von dem Aufsatzteil 3 abgewandten Stellung.

Verschiebt der Benutzer den Schalter 7 in Richtung der Längsachse 4 auf das Aufsatzteil 3 hin, so hat dies zur Folge, daß der Schalter 7 in eine Einschaltposition gelangt, die in der Fig. 2 dargestellt ist. In dieser Einschaltposition befinden sich die Flügel 9 der Antriebswelle 8 nur noch zum Teil im Bereich der Längsstege 12 der Antriebshülse 11. Die Antriebshülse 11 und der Schalter 7 befinden sich somit in einer dem Aufsatzteil 3 zugewandten Stellung.

Läßt der Benutzer den Schalter 7 wieder los, so drückt die Schraubenfeder 15 den Schalter 7 mitsamt der Antriebshülse 11 wieder in die Ausschaltposition zurück. In der Ausschaltposition ist der Motor 5 ausgeschaltet, während in der Einschaltposition des Schalters 7 der Motor 5 eingeschaltet ist und damit die Antriebswelle 8 in Rotation versetzt. Dies hat zur Folge, daß in der Einschaltposition auch die Antriebshülse 11 über die Flügel 9 und die Längsstege 12 in Rotation versetzt wird.

Von der Antriebshülse 11 steht ein Lagerrohr 16 in Richtung der Längsachse 4 ab, das zum Aufsatzteil 3 hin ausgerichtet ist. Das Lagerrohr 16 besitzt eine zur Längsachse 4 konzentrische Bohrung 17, in die ein freies Ende einer Welle 18 lose eingesteckt ist. Die Welle 18 ist in der Längsachse 4 angeordnet. Der Durchmesser der Welle 18 ist geringfügig kleiner als der Durchmesser der Bohrung 17, so daß die Welle 18 in der Bohrung 17 rotieren und in Richtung der Längsachse 4 verschoben werden kann.

Das andere Ende der Welle 18 ist an dem dem Aufsatzteil 3 zugewandten Ende des Griffteils in nicht näher dargestellter Weise gelagert. Dort ist auch auf das Ende der Welle 18 ein längliches, dünnes und flexibles Reinigungswerkzeug 19 in ebenfalls nicht näher dargestellter Weise drehfest aufgesteckt. Das Reinigungswerkzeug 19 ist innnerhalb des Aufsatzteils 3 geführt, wobei das Aufsatzteil 3 an seinem freien Ende eine Biegung 20 aufweist, die der besseren Handhabung durch den Benutzer dient. In der in der Fig. 1 dargestellten Position befindet sich das Reinigungswerkzeug 19 vollständig innerhalb des Aufsatzteils 3. In der in der Fig. 2 dargestellten Position befindet sich das Reinigungswerkzeug 19 teilweise außerhalb des Aufsatzteils 3 und steht somit mit einem gewissen Teil seiner Länge aus dem Aufsatzteil 3 heraus.

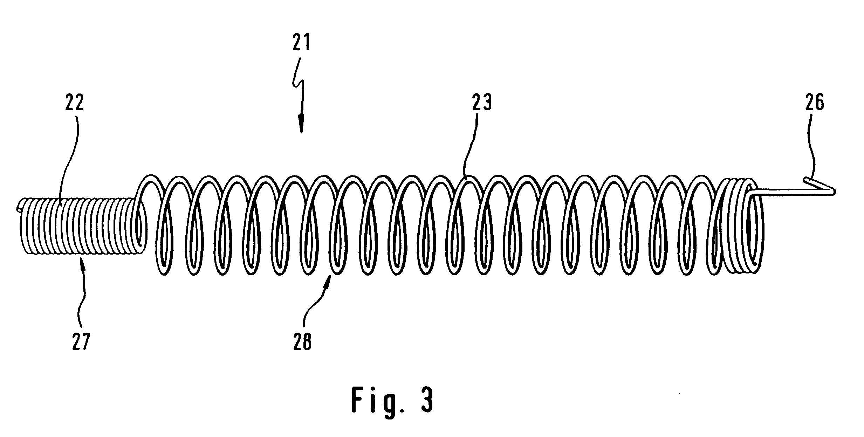

Auf die Welle 18 ist eine Feder 21 aufgesteckt, die in der Fig. 3 dargestellt ist. Die Feder 21 weist eine Mehrzahl von schraubenartigen Windungen auf und ist in zwei Bereiche 22, 23 aufgeteilt. In dem Bereich 22 haben die Windungen einen Durchmesser, der geringfügig kleiner ist als der Durchmesser der Welle 18, und in dem Bereich 23 haben die Windungen einen Durchmesser, der etwas größer ist als der Außendurchmesser des Lagerrohrs 16 der Antriebshülse 11. Im Bereich 22 sind die einzelnen Windungen der Feder 21 eng aneinanderliegend angeordnet, während im Bereich 23 die Windungen größtenteils zueinander beabstandet sind. Der Bereich 22 der Feder 21 weist im vorliegenden Ausführungsbeispiel etwa zwanzig Windungen auf, der Bereich 23 etwa funfundzwanzig Windungen.

Mit dem Bereich 22 ist die Feder 21 auf die Welle 18 aufgesteckt. Durch den geringfügig kleineren Durchmesser der Windungen des Bereichs 22 ist die Welle 18 fest von der Feder 21 umschlungen. Damit der Bereich 22 der Feder 21 nicht in Richtung der Längsachse 4 auf der Welle 18 verrutschen kann, ist die Welle 18 auf beiden Seiten des Bereichs 22 mit jeweils einem Anschlag 24, 25 versehen, die beide fest mit der Welle 18 verbunden sind. Die Anschläge 24 bzw. 25 haben des weiteren die Funktion, daß beim Abziehen bzw. Aufstecken des Reinigungswerkzeugs 19 auf die Welle 18 diese nicht aus dem Griffteil 2 herausgezogen bzw. vollständig hineingeschoben wird.

Der sich an den Bereich 22 anschließende Bereich 23 der Feder 21 ist auf der dem Aufsatzteil 3 abgewandten Seite des Bereichs 22 angeordnet und ist teilweise auf die Welle 18 und daran anschließend auf das Lagerrohr 16 aufgesteckt. Der Bereich 23 der Feder 21 erstreckt sich bis in den Bereich der Ringnut 13 der Antriebshülse 11, wo die Feder 21 mit Hilfe eines hakenförmigen freien Endes 26 drehfest an der Antriebshülse 11 gehalten ist.

In der Fig. 1 ist die Ausschaltposition des Zahnreinigungsgeräts 1 dargestellt. Die Antriebshülse 11 überstülpt vollständig die Flügel 9. Die an der Antriebshülse 11 festgelegte Feder 21 hat die Welle 18 mit Hilfe des eng umschlingenden Bereichs 22 und des Anschlags 25 in eine zurückgezogene Position gezogen. Damit nimmt auch das auf die Welle 18 aufgesteckte Reinigungswerkzeug 19 eine zurückgezogene Position ein und befindet sich innerhalb des Aufsatzteiles 3.

In der Fig. 2 ist, wie ebenfalls bereits erwähnt, die Einschaltposition des Zahnreinigungsgeräts 1 dargestellt. Die Antriebshülse 11 befindet sich nur noch zum Teil im Bereich der Flügel 9. Mit Hilfe des eng umschlingenden Bereichs 22 der Feder 21 und des Anschlags 24 befindet sich die Welle 18 in einer vorgeschobenen Position. Damit nimmt auch das Reinigungswerkzeug 19 eine vorgeschobene Position ein und ragt aus dem Aufsatzteil 3 heraus.

Wie bereits erläutert, wird in der in der Fig. 2 dargestellten Einschaltposition die Antriebshülse 11 von dem Motor 5 in eine Rotation um die Längsachse 4 versetzt. Damit rotiert auch die auf das Lagerrohr 16 drehfest aufgesteckte Feder 21 um die Längsachse 4. Da die Welle 18 nur lose in die Bohrung 17 des Lagerrohrs 16 eingesteckt ist, kann diese Rotation an sich ohne zusätzliche Maßnahmen noch nicht auf die Welle 18 übertragen werden. Durch den Bereich 22 der Feder 21 wird jedoch die Rotation auch auf die Welle 18 übertragen. Dies wird dadurch erreicht, daß der Durchmesser der Windungen des Bereichs 22 der Feder 21 geringfügig kleiner ist als der Durchmesser der Welle 18, und daß damit die Welle 18 fest von der Feder 21 umschlungen wird. Die auf diese Weise auf die Welle 18 übertragene Rotation hat zur Folge, daß auch das drehfest auf die Welle 18 aufgesteckte Reinigungswerkzeug 19 in eine Rotation versetzt wird. Der Benutzer kann somit seine Interdentalräume mit Hilfe des rotierenden und aus dem Aufsatzteil 3 herausragenden Reinigungswerkzeugs 19 reinigen.

Es besteht nun die Möglichkeit, daß das Reinigungswerkzeug 19 in der beschriebenen Einschaltposition in einem beispielsweise sehr engen Interdentalraum eingeklemmt wird. Damit in diesem Fall die Zähne des Benutzers nicht geschädigt werden und/oder das Reinigungswerkzeug 19 nicht zerstört wird, bildet der Bereich 22 der Feder 21 eine Rutschkupplung 27. Die Windungen der Feder 21 sind im Bereich 22 derart auf die Welle 18 gewickelt, daß diese Windungen bei rotierender Feder 21 aber nicht-rotierender Welle 18 praktisch aufgedreht werden, so daß der Durchmesser der Windungen im Bereich 22 der Feder 21 geringfügig größer wird. Aufgrund des vergrößerten Durchmessers kann die Welle 18 in dem Bereich 22 unter den Windungen der Feder 21 hindurchrutschen. Die Rotation der Antriebshülse 11 wird somit nicht mehr auf die Welle 18 und das Reinigungswerkzeug 19 übertragen. Erst wenn das Reinigungswerkzeug 19 nicht mehr eingeklemmt ist und wieder frei rotieren kann, wird die Welle 18 wieder eng von den Windungen des Bereichs 22 der Feder 21 umschlungen, so daß die Rotation der Antriebshülse 11 über die Feder 21 an die Welle 18 und damit auch an das Reinigungswerkzeug 19 weitergegeben wird.

Die Rutschkupplung 27 bildet somit eine drehfeste Verbindung zwischen der Antriebshülse 11 und dem Reinigungswerkzeug 19, sofern ein bestimmtes Bremsmoment an dem Reinigungswerkzeug 19 nicht überschritten wird. Wird hingegen dieses Bremsmoment überschritten, wird also im Extremfall das Reinigungswerkzeug 19 angehalten, so rutscht die Rutschkupplung 27 durch und stellt somit keine drehfeste Verbindung zwischen der Antriebshülse 11 und dem Reinigungswerkzeug 19 mehr dar. Mit Hilfe der Rutschkupplung 27 ist somit eine Begrenzung des auf das Reinigungswerkzeug 19 zu übertragenden Drehmoments möglich. Der Wert, bei dem die Rutschkupplung beginnt, die drehfeste Verbindung zu lösen, also durchzurutschen, hängt dabei insbesondere von dem Durchmesser, der Anzahl und der Federkonstante der Windungen des Bereichs 22 der Feder 21 ab.

Abweichend von der beschriebenen Ausführungsform ist es auch möglich, daß im Bereich 23 der Feder 21 eine Rutschkupplung vorgesehen ist, insbesondere auf dem Außendurchmesser des Lagerrohrs 16. In diesem Fall müßte der Bereich 22 der Feder 21 drehfest mit der Welle 18 verbunden werden. Des weiteren ist es möglich, zwei Rutschkupplungen vorzusehen, nämlich im Bereich 22 und im Bereich 23 der Feder 21.

Eine weitere Möglichkeit der Fehlbedienung des Gerätes besteht darin, daß das Aufsatzteil 3 beim Verschieben des Schalters 7 von der Ausschalt- in die Einschaltposition nicht einem Interdentalraum gegenübersteht, sondern beispielsweise einer Zahnfläche des Benutzers. Das Reinigungswerkzeug 19 würde in diesem Fall ohne weitere Vorkehrungen zwar auch aus dem Aufsatzteil 3 herausgeschoben werden können, aber auf der Zahnfläche abknicken. Damit diese Situation, in der die Zähne oder das Zahnfleisch des Benutzers geschädigt oder verletzt und/oder das Reinigungswerkzeug 19 zerstört werden könnten, ausgeschlossen wird, weist die Feder 21 einen Pufferbereich 28 auf. Mit Hilfe des Pufferbereichs 28 ist es möglich, daß der Schalter 7 und damit auch die Antriebshülse 11 zur Einschaltposition hin verschoben werden können, ohne daß gleichzeitig die Welle 18 und damit das Reinigungswerkzeug 19 verschoben wird. Die Antriebshülse 11 und das Reinigungswerkzeug 19 sind somit in Richtung der Längsachse 4 relativ zueinander verschiebbar. Das Verschieben der Antriebshülse 11 zur Einschaltposition hin erfolgt dabei im Falle des nicht-verschiebbaren bzw. blockierten Reinigungswerkzeugs 19 gegen den Druck der Windungen des Bereichs 23 der Feder 21. Ist das Reinigungswerkezug 19 nicht mehr blockiert, so bewirkt nunmehr die zusammengedrückte Feder 21, daß das Reinigungswerkzeug 19 von der Feder 21 aus dem Aufsatzteil in die Einschaltposition herausgeschoben wird.

Die Länge des Pufferbereichs 28 in Richtung der Längsachse 4 ist so gewählt, daß sie mindestens derjenigen Länge entspricht, um die die Antriebshülse 11 in Richtung der Längsachse 4 von der Ausschalt- in die Einschaltposition verschoben werden kann. Dadurch wird erreicht, daß die Antriebshülse 11 vollständig von der in der Fig. 1 dargestellten Ausschaltposition in die in der Fig. 2 dargestellten Einschaltposition verschoben werden kann, ohne daß diese Schiebebewegung auf die Welle 18 und damit auf das Reinigungswerkzeug 19 übertragen wird. Statt dessen wird die gesamte Schiebebewegung im Pufferbereich 28 von der Feder 21 aufgenommen, indem sich die Antriebshülse 11 und die Welle 18 bei gleichzeitigem Zusammendrücken der Feder 21 so lange relativ zueinander verschieben, bis das freie Ende des Lagerrohrs 16 der Antriebshülse 11 an den Anschlag 25 der Welle 16 anstößt.

Die gesamte Antreibshülse 11 ist vorzugsweise einstückig aus Kunststoff hergestellt. Die Welle 18 besteht ebenfalls aus Kunststoff, so daß die Anschläge 24, 25 durch Induktionsschweißen auf der Welle 18 befestigt werden können. Die Feder 21 ist entsprechend der Fig. 3 aus einem Federdraht gebogen.

## Patentansprüche

1. Elektrisch betriebenes Zahnreinigungsgerät (1), bei dem ein Reinigungswerkzeug (19) mit Antriebsmitteln gekoppelt und in Rotation um eine zentrale Achse versetzbar ist, wobei das Reinigungswerkzeug (19) in Richtung der Längsachse (4) relativ zu den Antriebsmitteln verschiebbar angeordnet ist, **dadurch gekennzeichnet, daß** zur Kopplung des Reinigungswerkzeuges (19) mit den Antriebsmitteln ein elastisches Kopplungselement vorgesehen ist.

2. Zahnreinigungsgerät nach Anspruch 1, **dadurch gekennzeichnet, daß** das elastische Element eine Feder (21), bevorzugt mit mehreren schraubenartigen Windungen, ist, die einen Pufferbereich (28) aufweist.

3. Zahnreinigungsgerät nach einem der Ansprüche 1 oder 2, **dadurch gekennzeichnet, daß** wenigstens Teile der Antriebsmittel verschiebbar in dem Zahnreinigungsgerät (1) angeordnet sind.

4. Zahnreinigungsgerät nach Anspruch 2 oder 3, **dadurch gekennzeichnet, daß** der Pufferbereich (28) eine Länge aufweist, die etwa dem Hub entspricht, um die die Antriebsmittel in Richtung der zentralen Achse verschiebbar sind.

5. Zahnreinigungsgerät nach einem der vorhergehenden Ansprüche, **dadurch gekennzeichnet, daß** das elastische Element, insbesondere eine Anzahl der Windungen der Feder (21), eine Art Rutschkupplung (27) der Drehmomentbegrenzungsvorrichtung aufweist, so daß eine Begrenzung des von den Antriebsmitteln auf das Reinigungswerkzeug (19) übertragenen Drehmoments erreichbar ist.

6. Zahnreinigungsgerät nach einem der vorhergehenden Ansprüche, **dadurch gekennzeichnet, daß** das Reinigungswerkzeug (19) auf eine in Richtung der Längsachse (4) verschiebbare Welle (18) aufsteckbar ist.

7. Zahnreinigungsgerät nach Anspruch 6, **dadurch gekennzeichnet, daß** die die Rutschkupplung (27) bildenden Windungen von der Welle (18) getragen sind und einen Durchmesser aufweisen, der bevorzugt geringfügig kleiner ist als der Durchmesser der Welle (18).

8. Zahnreinigungsgerät nach einem der vorhergehenden Ansprüche, **dadurch gekennzeichnet, daß** die Antriebsmittel eine in Richtung der Längsachse (4) verschiebbare Antriebshülse (11) aufweisen und das elastische Element, insbesondere die Feder (21), drehfest mit der Antriebshülse (11) verbunden ist.

9. Zahnreinigungsgerät nach einem der vorhergehenden Ansprüche 2 bis 8, **dadurch gekennzeichnet, daß** die Feder (21) in Richtung der Längsachse (4) zwei Bereiche (22, 23) mit unterschiedlichen Durchmessern aufweist.

10. Zahnreinigungsgerät nach einem der vorhergehenden Ansprüche 8 oder 9, **dadurch gekennzeichnet, daß** die Antriebshülse (11) ein in Richtung der Längsachse (4) angeordnetes Lagerrohr (16) aufweist, in das die Welle (18) lose eingesteckt und/oder auf das elastische Element, insbesondere die Feder (21) aufgesteckt ist.

## Claims

1. An electrically powered dental cleansing apparatus (1) in which a cleansing implement (19) is coupled to driving elements and adapted to be set in rotation about a central axis, in which the cleansing implement (19) is arranged for displacement relative to the driving elements in the direction of the longitudinal axis (4), **characterized in that** provision is made for a resilient coupling element to effect the coupling between the cleansing implement (19) and the driving elements.

2. The dental cleansing apparatus as claimed in claim 1, **characterized in that** the resilient element includes a spring (21) having preferably several helical turns and including a buffer zone (28).

3. The dental cleansing apparatus as claimed in any one of the claims 1 or 2, **characterized in that** at least portions of the driving elements are displaceably arranged in the dental cleansing apparatus (1).

4. The dental cleansing apparatus as claimed in any one of the claims 2 or 3, **characterized in that** the buffer zone (28) has a length corresponding approximately to the length of travel through which the driving elements are displaceable in the direction of the central axis.

5. The dental cleansing apparatus as claimed in any one of the preceding claims, **characterized in that** the resilient element, in particular a number of turns of the spring (21), provides a type of slip coupling (27) or torque transmission control device enabling the torque transmitted from the driving elements to the cleansing implement (19) to be limited.

6. The dental cleansing apparatus as claimed in any one of the preceding claims, **characterized in that** the cleansing implement (19) is adapted to be push-fitted onto a shaft (18) displaceable in the direction of the longitudinal axis (4).

7. The dental cleansing apparatus as claimed in claim 6, **characterized in that** the turns providing the slip coupling (27) are carried by the shaft (18) and are of a diameter preferably slightly smaller than the diameter of the shaft (18).

8. The dental cleansing apparatus as claimed in any one of the preceding claims, **characterized in that** the driving elements include a drive sleeve (11) displaceable in the direction of the longitudinal axis (4), and that the resilient element, in particular the spring (21), is connected with the drive sleeve (11) in a manner preventing relative rotation.

9. The dental cleansing apparatus as claimed in any one of the preceding claims 2 to 8, **characterized in that** the spring (21) includes two sections (22, 23) of different diameters in the direction of the longitudinal axis (4).

10. The dental cleansing apparatus as claimed in any one of the preceding claims 8 or 9, **characterized in that** the drive sleeve (11) includes a bearing tube (16) arranged in the direction of the longitudinal axis (4), said bearing tube receiving therein the shaft (18) with a loose fit and/or having the resilient element, in particular the spring (21) push-fitted onto it.

## Revendications

1. Appareil de nettoyage dentaire électrique (1), dans lequel un outil de nettoyage (19) est couplé à des moyens d'entraînement et susceptible d'être mis en rotation autour d'un axe central, et dans lequel l'outil de nettoyage (19) est agencé avec faculté de déplacement par rapport aux moyens d'entraînement en direction de l'axe longitudinal (4), **caractérisé en ce que** pour l'accouplement de l'outil de nettoyage (19) au moyen d'entraînement, il est prévu un élément d'accouplement élastique.

2. Appareil de nettoyage dentaire selon la revendication 1, **caractérisé en ce que** l'élément élastique est un ressort (21), de préférence avec plusieurs spires hélicoïdales, qui comprend une zone tampon (28).

3. Appareil de nettoyage dentaire selon l'une ou l'autre des revendications 1 et 2, **caractérisé en ce que** des parties des moyens d'entraînement au moins sont agencées avec faculté de déplacement dans l'appareil de nettoyage dentaire (1).

4. Appareil de nettoyage dentaire selon l'une ou l'autre des revendications 2 et 3, **caractérisé en ce que** la zone tampon (28) présente une longueur qui correspond approximativement à la course sur laquelle les moyens d'entraînement sont déplaçables en direction de l'axe central.

5. Appareil de nettoyage dentaire selon l'une des revendications précédentes, **caractérisé en ce que** l'élément élastique, et en particulier un certain nombre des spires du ressort (21), comporte une sorte d'embrayage à glissement (27) à titre de dispositif de limitation de couple, de sorte qu'il est possible d'obtenir une limitation du couple de rotation transmis par des moyens d'entraînement à l'outil de nettoyage (19).

6. Appareil de nettoyage dentaire selon l'une des revendications précédentes, **caractérisé en ce que** l'outil de nettoyage (19) est enfichable sur un arbre (18) susceptible de se déplacer en direction de l'axe longitudinal (4).

7. Appareil de nettoyage dentaire selon la revendication 6, **caractérisé en ce que** les spires qui constituent l'embrayage à glissement (27) sont portées par l'arbre (18) et présentent un diamètre qui est de préférence légèrement plus petit que le diamètre de l'arbre (18).

8. Appareil de nettoyage dentaire selon l'une des revendications précédentes, **caractérisé en ce que** les moyens d'entraînement comprennent une douille d'entraînement (11) déplaçable en direction de l'axe longitudinal (4), et **en ce que** l'élément élastique, en particulier le ressort (21), est relié solidaire en rotation avec la douille d'entraînement (11).

9. Appareil de nettoyage dentaire selon l'une des revendications 2 à 8, **caractérisé en ce que** le ressort (21) présente en direction de l'axe longitudinal (4) deux zones (22, 23) avec des diamètres différents.

10. Appareil de nettoyage dentaire selon l'une ou l'autre des revendications 8 et 9, **caractérisé en ce que** la douille d'entraînement (11) comporte un tube de montage (16) agencé en direction de l'axe longitudinal (4), dans lequel l'arbre (18) est enfiché de façon lâche et/ou sur lequel est enfilé l'élément élastique, en particulier le ressort (21).
